# EUROPEAN PATENT SPECIFICATION

(11) **EP 3 309 136 B1**
(45) Date of publication and mention of the grant of the patent: **05.10.2022**
(21) Application number: 17184099.4
(22) Date of filing: 31.07.2017
(51) Int. Cl.: C04B 41/89, F01D 5/28, B24C 1/04

(54) **METHOD OF FORMING AN ARTICLE**
VERFAHREN ZUR HERSTELLUNG EINES GEGENSTANDS
PROCÉDÉ DE FORMATION D'UN ARTICLE

(30) Priority: 13.10.2016 US 201615292589
(43) Date of publication of application: 18.04.2018
(73) Proprietor: General Electric Company, Schenectady, NY 12345 (US)
(72) Inventor: BALDWIN, Donald Joseph, Schenectady, NY 12345 (US); MARGOLIES, Joshua Lee, Schenectady, NY 12345 (US); KITTLESON, Jacob John, Greenville, SC 29615 (US)
(74) Representative: Novagraaf Group

(56) References cited:
- US-A1- 2005 227 589
- US-A1- 2015 118 443
- US-A1- 2015 118 444
- ANONYMOUS: "KochWunder Silikon Abtropfgitter für Arbeitsfläche und Erweiterung Untersetzer Ablage (petrol)", amazon.de INTERNET ARTICLE, 15 June 2016 (2016-06-15), XP002778502, Retrieved from the Internet: URL:https://www.amazon.de/KochWunder-Abtro pfgitter-Arbeitsfl%C3%A4che-Erweiterung-Un tersetzer/dp/B01H3QRP2O [retrieved on 2018-02-22]

## Description

The contents of commonly assigned US 2015/0118444 (U.S. Application 14/068,840), entitled METHODS OF MANUFACTURING SILICA-FORMING ARTICLES HAVING ENGINEERED SURFACES TO ENHANCE RESISTANCE TO CREEP SLIDING UNDER HIGH-TEMPARATURE LOADING and commonly assigned US 2015/0118443 (U.S. Application 14/068,693), entitled SILICA-FORMING ARTICLES HAVING ENGINEERED SURFACES TO ENHANCE RESISTANCE TO CREEP SLIDING UNDER HIGH-TEMPERATURE LOADING are mentioned for context.

### BACKGROUND OF THE TECHNOLOGY

The present technology generally relates to coating systems and methods suitable for protecting components exposed to high-temperature environments, such as the hostile thermal environment of a turbine engine. More particularly, this technology is directed to an Environmental Barrier Coating (EBC) on a silicon-containing region of a component and to the incorporation of surface features in the silicon-containing region to inhibit creep displacement of the EBC when subjected to shear loading at elevated temperatures.

Higher operating temperatures for turbine engines are continuously sought in order to increase their efficiency. Though significant advances in high temperature capabilities have been achieved through formulation of iron, nickel and cobalt-base superalloys, alternative materials have been investigated. Ceramic composite materials are currently being considered for such high temperature applications as combustor liners, vanes, shrouds, blades, and other hot section components of turbine engines. Some examples of ceramic composite materials include silicon-based composites, for example, composite materials in which silicon, silicon carbide (SiC), silicon nitride (Si₃N₄), and/or a silicide serves as a reinforcement phase and/or a matrix phase.

In many high temperature applications, a protective coating is beneficial or required for a Si-containing material. Such coatings should provide environmental protection by inhibiting the major mechanism for degradation of Si-containing materials in a water-containing environment, namely, the formation of volatile silicon hydroxide (for example, Si(OH)₄) products. A coating system having these functions will be referred to below as an environmental barrier coating (EBC) system. Desirable properties for the coating material include a coefficient of thermal expansion (CTE) compatible with the Si-containing substrate material, low permeability for oxidants, low thermal conductivity, stability and chemical compatibility with the Si-containing material.

The silicon content of a silicon-containing bondcoat reacts with oxygen at high temperatures to form predominantly an amorphous silica (SiO₂) scale, though a fraction of the oxide product may be crystalline silica or oxides of other constituents of the bondcoat and/or EBC. The amorphous silica product exhibits low oxygen permeability. As a result, along with the silicon-containing bondcoat, the silica product that thermally grows on the bondcoat is able to form a protective barrier layer.

The amorphous silica product that forms on a silicon-containing bondcoat in service has a relatively low viscosity and consequently a high creep rate under shear loading. High shear loads (e.g. from about 0.1 to 10 MPa) can be imposed by g forces (e.g. from about 10,000 to about 100,000 g's) resulting from high-frequency rotation of moving parts, such as blades (buckets) of turbine engines. Such shear loading may cause creep displacements of the EBC relative to the bondcoat and substrate which can result in severe EBC damage and loss of EBC protection of the underlying substrate.

US 2015/0118444 relates to a method of forming an article including forming a silicon-containing layer on a silicon-containing region of a surface of a substrate of the article; forming a plurality of channels and ridges in the silicon-containing layer; and forming at least one outer layer overlying the surface of the silicon-containing region.

### BRIEF DESCRIPTION OF THE TECHNOLOGY

According to the invention, a method of forming an article comprises forming a plurality of channels and ridges in a silicon-containing layer on a surface of a substrate of the article using a mask placed on the surface of the substrate or the silicon-containing layer, wherein the placement of the mask is provided by an additive manufacturing process. A mask for forming a plurality of channels and ridges in a silicon-containing layer on a surface of a substrate of an article may be formed of flexible, heat resistive material and comprises a plurality of apertures in a pattern corresponding the plurality of channels and ridges.

The article may be a rotating component of the gas turbine engine and the channels and ridges extend in a direction substantially perpendicular to a shear load applied to the article during rotation of the article.

### BRIEF DESCRIPTION OF THE DRAWINGS

These and other features, aspects, and advantages of the present technology will become better understood when the following detailed description is read with reference to the accompanying drawings in which like characters represent like parts throughout the drawings, wherein:
FIG. 1schematically depicts an article or component that may be coated with coatings of the present technology and according to methods of the present technology;
FIG. 2 schematically depicts a section of the article or component of FIG. 1 including a coating according to an example of the present technology;
FIGS. 3-3B schematically depict engineered surfaces of a bondcoat of the article or component according to examples of the present technology;
FIG.4 schematically depicts a process for forming engineered surfaces;
FIG. 5 schematically depicts a process for forming engineered surfaces;
FIG. 6 schematically depicts a process a forming engineered surfaces;
FIG. 7 schematically depicts an arrangement for forming engineered surfaces according to the present technology;
FIG. 7A schematically depicts another arrangement for forming engineered surfaces according to the present technology;
FIG. 7B schematically depicts another arrangement for forming engineered surfaces according to the present technology;
FIG. 7C schematically depicts another arrangement for forming engineered surfaces according to the present technology;
FIG. 7D schematically depicts another arrangement for forming engineered surfaces according to the present technology;
FIG. 7E schematically depicts another arrangement for forming engineered surfaces according to the present technology;
FIG. 7F schematically depicts another arrangement for forming engineered surfaces according to the present technology;
FIG. 8 schematically depicts an arrangement for forming engineered surfaces according to the present technology;
FIG. 8A schematically depits another arrangement for forming engineered surfaces according to the present technology;
FIG. 9 schematically depicts an airfoil having a mask for forming engineered surfaces according to the present technology;
FIG. 10 schematically depicts another view of the airfoil and mask of FIG. 9;
FIG. 11 schematically depicts another view of the airfoil and mask of FIGS. 9 and 10;
FIG. 12 schematically depicts the airfoil of FIG. 9 with the mask removed and the engineered surfaces formed thereon;
FIG. 13 schematically depicts the airfoil of FIG. 12 from another perspective;
FIG. 14 schematically depicts the airfoil of FIGS. 12 and 13 from another perspective; and
FIG. 15 schematically depicts a mask according to the present technology.

### DETAILED DESCRIPTION

The present technology is generally applicable to components that operate within environments characterized by relatively high temperatures, stresses, and oxidation. Notable examples of such components include high and low pressure turbine vanes (nozzles) and blades (buckets), though the technology has application to other components.

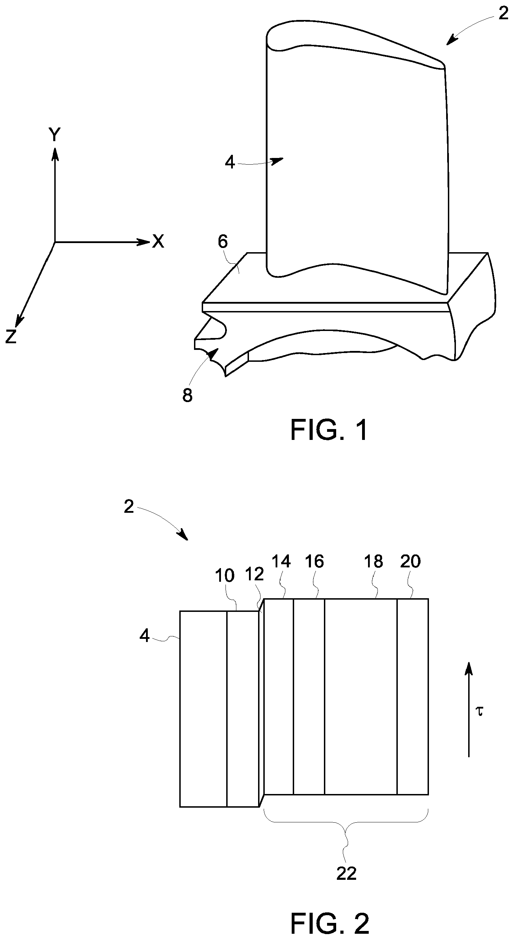

Referring to FIGS. 1 and 2, an article or component 2, for example a turbine bucket or blade, may include an Environmental Barrier Coating (EBC) system 22 to protect the article or component when operated in a high-temperature, chemically reactive environment. The component 2 may include a substrate 4, for example an airfoil section, extending from a platform 6. The platform 6 may include a mounting and securing structure 8 configured to mount and secure the component to a rotating element, such as a rotor (not shown). The substrate 4 may include a silicon containing region. Examples of silicon-containing materials include those with a silicon carbide, silicon nitride, a silicide (for example, a refractory metal or transition metal silicide, including, but not limited to, for example Mo, Nb, or W silicides) and/or silicon as a matrix or second phase. Further examples include ceramic matrix composites (CMC) that contain silicon carbide as the reinforcement and/or matrix phase.

The EBC system 22 of FIG. 2 represents one of a variety of different EBC systems shown as being directly applied to a surface of the substrate 4. A silicon-containing bondcoat is disclosed in, for example, U.S. 6,299,988. The bondcoat 10 is further represented as bonding a first, or initial, EBC layer 14 to the substrate 4, and optionally at least one additional layer 16, 18, 20 of the EBC system 22. The EBC system 22 provides environmental protection to the underlying substrate 4. It may also reduce the operating temperature of the component 2, thereby enabling the component 2 to operate at higher gas temperatures than otherwise possible. While FIG. 2 represents the component 2 as including the silicon-containing bondcoat 10, in which case the first EBC layer 14 is deposited directly on a silicon-containing surface region formed by the bondcoat 10, the technology is also applicable to a component 2 that does not include a bondcoat 10 as described herein, in which case the first EBC layer 14 may be deposited directly on a silicon-containing surface region formed by the substrate 4. It should be appreciated that a constituent layer 12, or a portion of the constituent layer 12, described in more detail below, may be present prior to application of the first EBC layer 14.

Degradation of a silicon-containing material in a combustion environment results in reaction with water vapor to form volatile silicon hydroxide (for example, Si(OH)₄) products. The EBC system 22 may serve to resist recession by chemical reaction of the bondcoat 10 and/or substrate 4 with water vapor, provide a temperature gradient to reduce the operating temperature of the component 2, or both. Suitable EBC systems usable with the present technology include, but are not limited to, those disclosed in, for example, U.S. 6,296,941 and U.S. 6,410,148. The EBC system 22 may perform a multitude of sealing, reaction barrier, recession resistance, and/or thermal barrier functions.

As noted above, each of the bondcoat 10 and substrate 4 may define a surface region of the component 2 that contains silicon. For example, the bondcoat 10 may comprise or consist essentially of elemental silicon. Alternatively, the bondcoat 10 may contain silicon carbide, silicon nitride, metal silicides, elemental silicon, silicon alloys, or mixtures thereof. Bondcoat 10 may further contain oxide phases, such as silica, rare earth silicates, rare earth aluminosilicates, and/or alkaline earth aluminosilicates. The use of silicon-containing compositions for the bondcoat 10 improves oxidation resistance of the substrate 4 and enhances bonding between the substrate 4 and first EBC layer 14. The silicon of the bondcoat 10 reacts with oxygen at elevated temperatures to thermally grow the constituent layer 12 of predominantly amorphous silica (Si02) on its surface, as schematically represented in FIG. 2. The resulting thermally grown oxide of amorphous silica exhibits low oxygen permeability. As a result, along with the silicon-containing bondcoat 10, the constituent layer 12 is able to deter permeation of oxygen into the bondcoat 10 and substrate 4. During growth of the constituent layer 12, some of the amorphous silica may crystallize into crystalline silica and additional impurity elements and second phases can be incorporated therein.

In the absence of the silicon-containing bondcoat 10, the first layer 14 of the EBC system 22 can be deposited directly on a silicon-containing surface region of the component 2 defined by the substrate 4, in which case the substrate 4 is formed to have a composition whose silicon content is sufficient to react with oxygen at elevated temperatures and form a silica-rich constituent layer 12 described above. Furthermore, depending on the composition of the substrate 4, this layer may be a predominantly amorphous silica product, a silica-rich glass, or a multi-phase mixture wherein at least one of the phases is silica-rich. As a matter of convenience, the remaining disclosure will make reference to embodiments that include the bondcoat 10 as represented in FIG. 2, though the disclosure should be understood to equally apply to a constituent layer 12 that forms on the surface of the substrate 4.

The constituent layer 12 that forms on the silicon-containing bondcoat 10 or another silicon-containing surface region, such as the substrate 4, during high temperature service may grow to thicknesses of up to about 50 µm or more, depending on the application. The constituent layer 12 may have a relatively low viscosity and consequently a high creep rate under shear loading τ that can be imposed by g forces that occur during rotation of components, such as blades (buckets) of turbine engines. As a result of creep of the constituent layer 12, displacements of the overlying EBC system 22 relative to the substrate 4 can exceed 100 mm over 25,000 hours service at about 1315°C (about 2400°F). Such large creep displacements can result in severe damage to the EBC system 22 and direct loss of environmental protection of the underlying substrate 4.

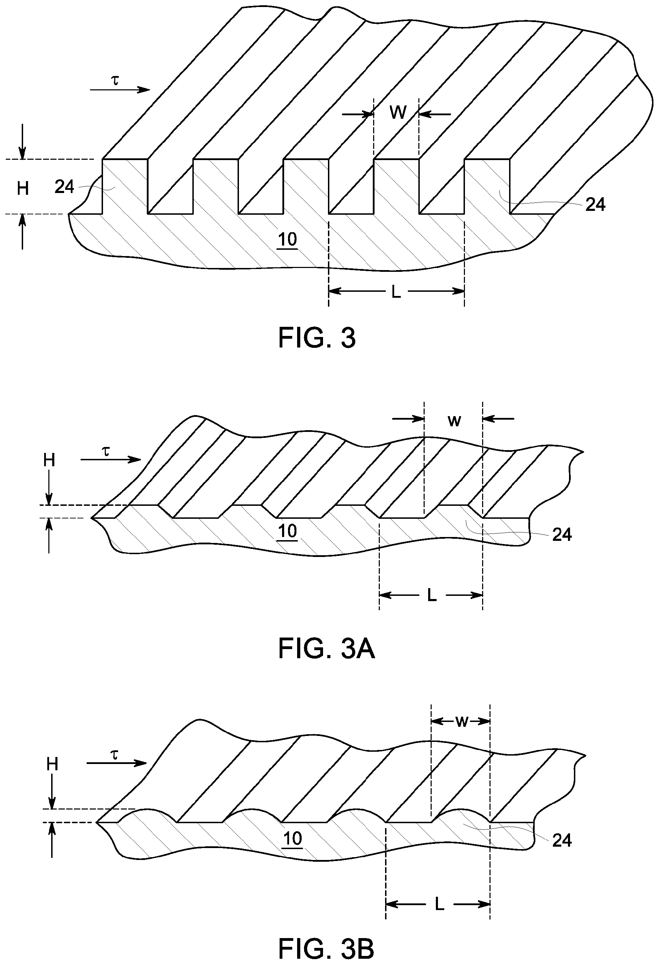

Referring to FIG. 3, creep of the constituent layer 12 that forms on the silicon-containing bondcoat 10 (or, in the absence of the bondcoat 10, on the surface of the substrate 4) may be inhibited by providing the surface of the bondcoat 10 with engineered surfaces or features 24 configured to mitigate creep of the constituent layer 12. As shown in FIG. 3, the surface features may take the form of ridges 24 as described in co-pending, commonly assigned US 2015/0118443 (U.S. Application 14/068,693). The ridges 24 may have a wavelength L and a span

W that defines a ratio α (W/L that may be from about 0.1 to 0.9, for example about 0.2 to 0.8, for example about 0.4 to 0.6. Although the ridges 24 are shown as being generally square in cross section and extending substantially perpendicular to the shear loading direction (i.e. in a substantially chordwise direction), it should be appreciated that the engineered surfaces, e.g. ridges 24, may have other cross sectional shapes, e.g. rectangular, trapezoidal, or any generally sinusoidal or wavy-shaped configuration. It should also be appreciated that although the examples show the surfaces 24 perpendicular to the shear stress, the surfaces 24 may be provided at an angle to the shear loading direction, e.g. up to about 45° to the shear loading direction. It should also be appreciated that although the engineered surfaces are shown as periodic and continuous, the surfaces may be non-periodic and/or non-continuous. It should further be appreciated that the engineered surfaces may be provided as sets of intersecting surfaces, e.g. diamond shapes formed, by example. Referring to FIG. 3A, the engineered surfaces 24 may have a generally trapezoidal shape. Referring to FIG. 3B, the engineered surfaces 24 may have a generally wavy or wave-like shape.

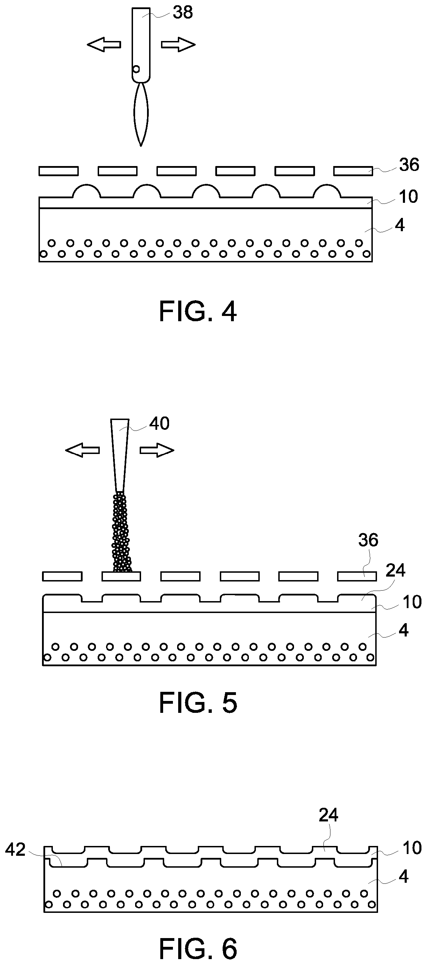

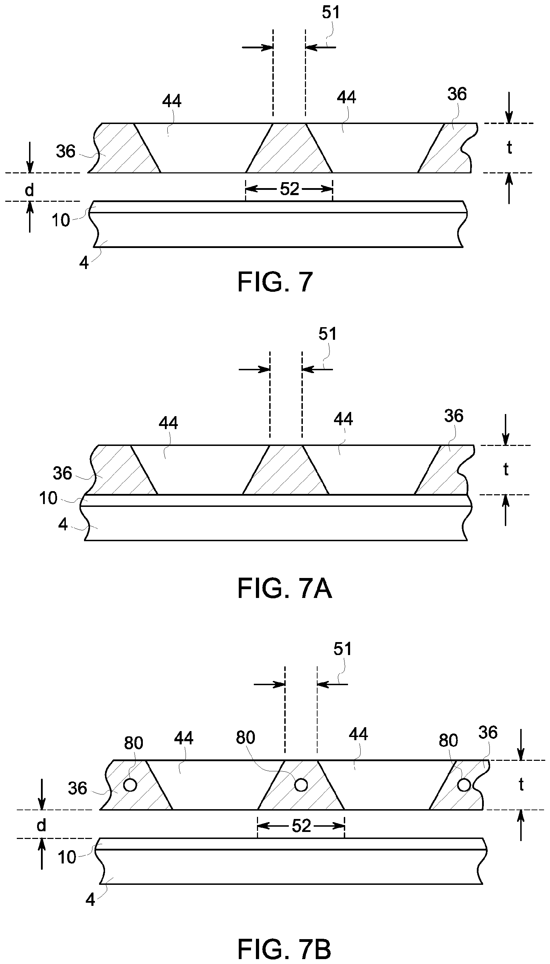

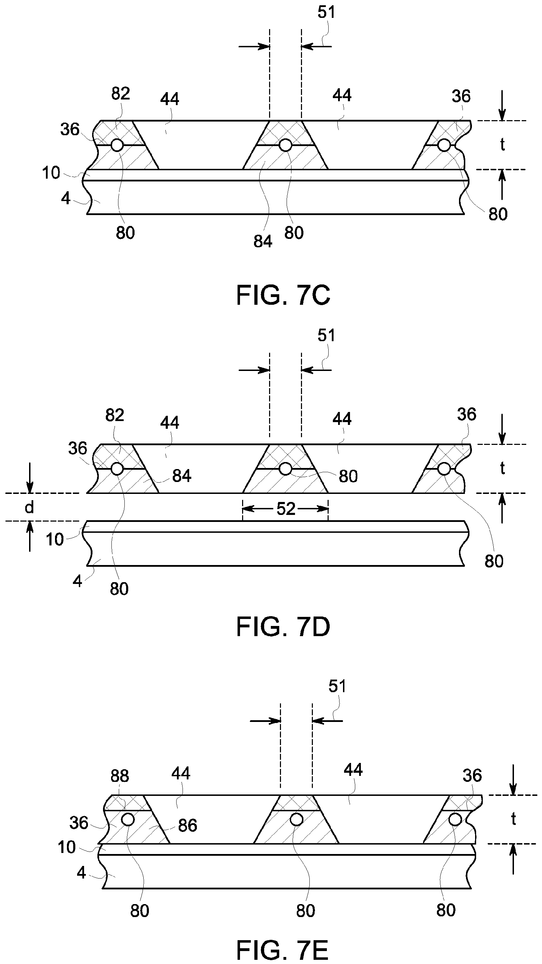

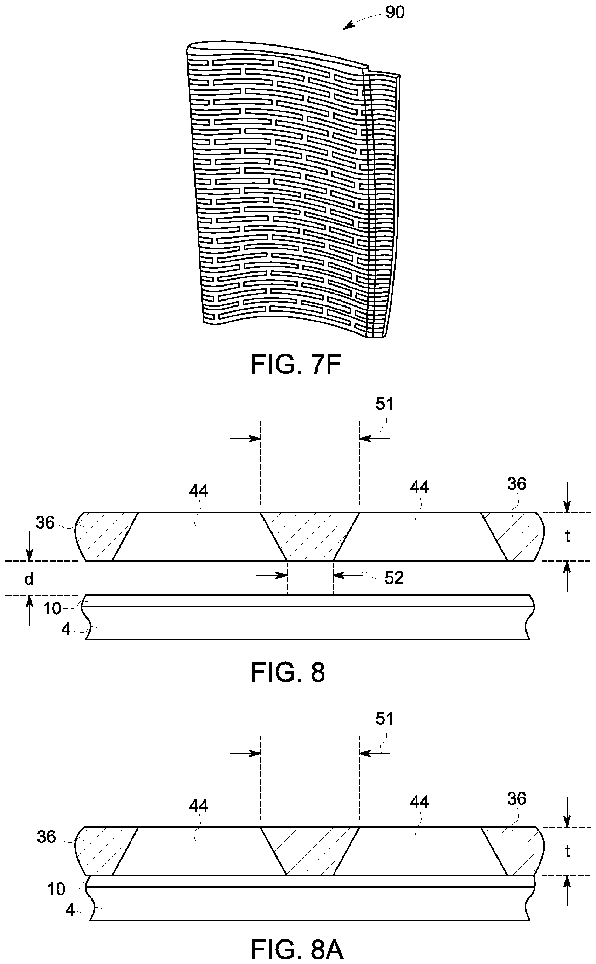

Referring to FIG. 4, which is not according to the invention, , the engineered surfaces, e.g. ridges 24, may be formed by an additive process to selectively add material to define the ridges 24 that are separated by groove valleys, or grooves 25. A thermal spray, e.g. an air plasma spray (APS) device 38, is configured to spray material (e.g. Si) for forming the bondcoat 10 through a patterned mask 36 having apertures or slots 44 (FIGS. 7 and 8) that define the position of the ridges 24 on the substrate 4. The APS device 38 is configured to move over the mask 36, as shown by the arrows, to form the ridges on the bondcoat 10. Alternatively, the ridges 24 may be formed by an additive process including spraying the material of the ridges 24 (e.g. Si) using a direct-write torch. It should be appreciated that any thermal spray process may be used, including for example, air plasma spray; plasma, including laser produced plasma, atmospheric or low pressure or vacuum plasma; HVOF; cold spray; combustion; or kinetic.

Referring to FIG. 5, which is not according to the invention, the engineered surfaces 24 may be formed by a subtractive process. A grit blasting device 40 may blast particles through the apertures 44 of a patterned mask 36 to form groove valleys 25 thus forming the ridges 24. The particles may be, for example, SiC or alumina (Al₂O₃) particles. The grit blast device 40 may move, for example as shown by the arrows, across the patterned mask 36 to form the ridges 24 on the bondcoat 10. Alternatively, the groove valleys 25 may be formed by another subtractive process, for example laser machining or using a micro-waterjet to machine the grooves 25.

Referring to FIG. 6, the substrate 4 may be patterned to include engineered surfaces so that upon application of the bondcoat 10, the engineered surfaces 24 of the bondcoat 10 are formed corresponding to the engineered surfaces of the substrate 4. The engineered surfaces of the substrate 4 may be provided by forming grooves 42 in the substrate. The grooves 42 may conform to the shape of the part and be continuous and substantially perpendicular to the shear loading direction, or at an angle up to about 45° to the shear loading direction. The engineered surfaces 24 of the bondcoat 10 may also be formed or partially formed by any of the processes described above with respect to FIGS. 4 and 5. The bondcoat 10 may be provided to the substrate by, for example, CVD, or any other suitable process.

Referring to FIGS. 7 and 8, in the formation of the engineered surfaces by subtractive methods, e.g. grit blasting or micro-waterjet machining, or additive methods, e.g. APS, the mask 36 may be spaced a distance d from the substrate 4 and/or bondcoat 10 of about 5 mils (.127 mm) or less, which is not according to the invention, and the mask 36 may have a thickness of between about 60 to 120 mils (1.5 to 3 mm). The slots 44 in the mask 36 may be tapered and have a nominal width of about 20 mils (.5 mm). As shown in FIG. 7 the mask 36 may be positioned so that the slots 44 converge toward the substrate 4 and bondcoat 10 for application of the engineered surfaces 24 through the additive process. Alternatively, as shown in FIG. 8 the mask 36 may be positioned so that the slots 44 of the mask 36 diverge toward the substrate 4 and the bondcoat 10. The openings of the slots 44 may be spaced a distance 51 from about 20 to 40 mils (.5 to 1 mm) and the exits of the slots 44 may be spaced a distance 52 from about 20 to 40 mils. As disclosed above, the slots 44 provided in the mask 44 may be periodic and/or continuous, or may be non-periodic and/or non-continuous. As also discussed above, the slots 44 may intersect to provide the engineered surfaces as sets of intersecting surfaces. Referring to FIGS. 7A and 8A, according to the invention, the mask is placed on the substrate 4 or the bondcoat 10 formed on the substrate rather than spaced from them. In a method, which is not according to the invention, the masks were formed by scanning a micro waterjet across a mask substrate formed of, for example, metal (e.g. HASTALLOY^{®}), having a thickness of about 60 mils (1.5 mm) or about 120 mils (about 3 mm), to form the slots 44. The slots 44 formed by scanning the micro waterjet have a tapered profile, as shown for example in FIGS. 7 and 8. It should be appreciated, however, that slots 44 having generally straight (i.e. generally parallel) edges and may be formed, by example by laser machining the mask substrate. The slots 44 may have a nominal width of about 20 mils (0.5 mm) at their narrowest portion.

Referring to FIG. 7B, the mask 36 may include a cooling channel(s) 80 to provide active cooling to the mask 36 during spraying of the engineered surfaces. In this configuration, the mask 36 may be made of a non-heat resistive material. The mask 36 may be made from, for example, aluminum. In a method, which is not according to the invention, the mask 36 may be formed from commercially available cooling plates by cutting the cooling plate to form the mask pattern used to form the engineered surfaces. As shown in FIGS. 7B and 7C, the mask 36 with the cooling channel(s) 80 may be spaced from the substrate 4 and bondcoat 10 when forming the engineered surfaces, or may be placed on the surface of the substrate 4 or the bondcoat 10 to form the engineered surfaces.

Referring to FIG. 7D, the mask 36 may be formed of a first sheet or foil 82 and a second sheet or foil 84 and have a cooling channel(s) formed between the first and second foils 82, 84. The foils may be formed of a heat resistive material or a non-heat resistive material. For example, the first and second foils 82, 84 may be formed of aluminum. As shown in FIG. 7D, which is not according to the invention, , the mask 36 may be spaced from the substrate 4 and the bondcoat 10 to form the engineered surfaces, but according to the invention the mask 36 is placed on the surface of the substrate 4 or the bondcoat 10 to form the engineered surfaces.

The mask may be formed, or manufactured, on the substrate 4 or the bondcoat 10 to form the engineered surfaces. According to the invention, the mask is formed by an additive manufacturing process, such as laser melting. A thermoplastic material may be melted and applied to the substrate 4 or the bondcoat 10 in the pattern of the mask for use in forming the engineered surfaces. Such a thermoplastic mask may be removed after use, for example by heat or chemical reaction, or by peeling the mask off. Referring to FIG. 7E, the mask 36 is formed by an additive manufacturing process, for example direct metal laser melting (DMLM). A metal, such as aluminum may be melted on the substrate 4 or the bondcoat 10 in the pattern of the mask to form a 3D printed mask 86. A cap 88 may be brazed over the 3D printed mask. The 3D printed mask 86 may be formed with a cooling channel(s) for circulating a cooling fluid during formation of the engineered surfaces.

As shown in FIG. 7F, a three-dimensional (3D) mask 90 may be formed by making a shell that corresponds to the geometry of the article 2. The shell may be formed by an additive manufacturing process. For example, a scan of the article 2 may be made to form a stereolithography (STL) file and the shell formed by an additive manufacturing process, e.g. 3D printing. The pattern of the mask 90 may be formed during manufacturing of the shell, or it may be formed after manufacturing of the shell, for example by a negative process such as cutting or by an additive process such as printing. The mask 90 may be formed to be placed on the surface of the substrate 4 or the bondcoat 10 to form the engineered surfaces. The mask 90 may also be formed to be placed over the substrate 4 so as to be spaced from the substrate 4 (and the bondcoat 10 if present) to form the engineered surfaces.

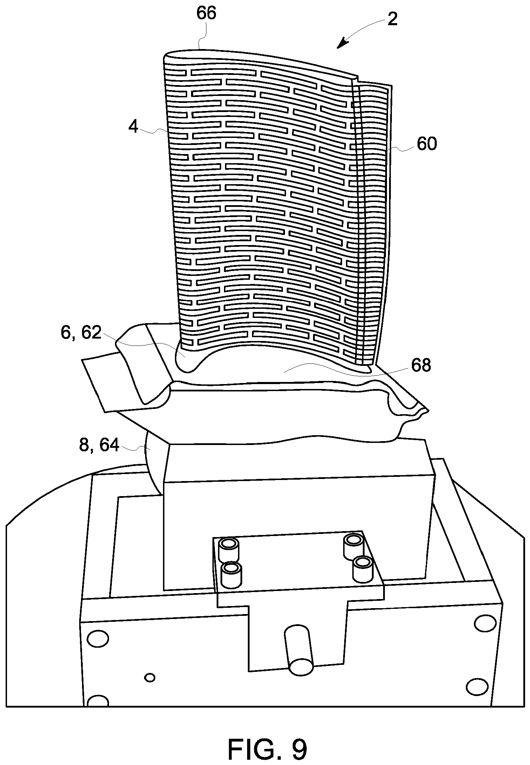

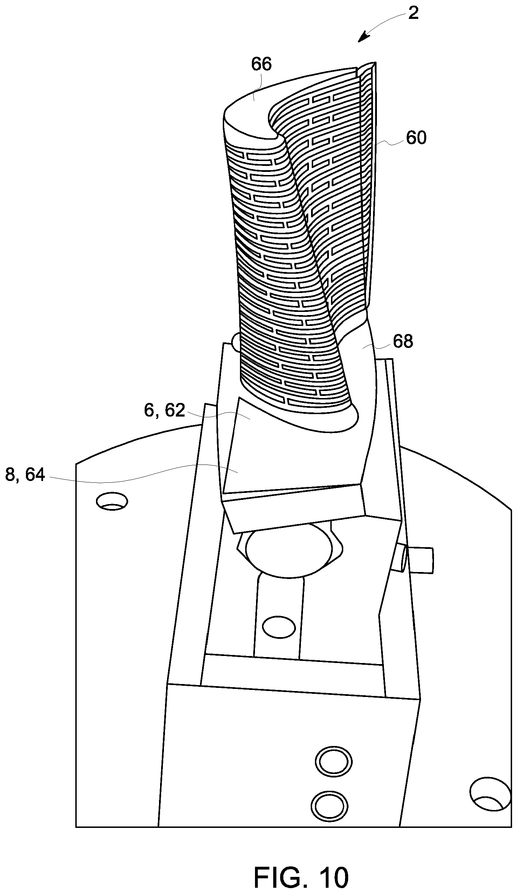

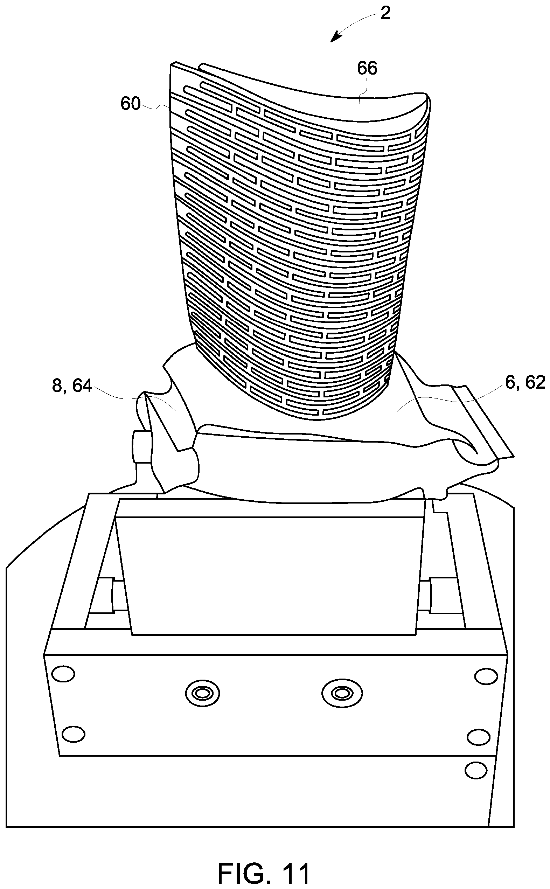

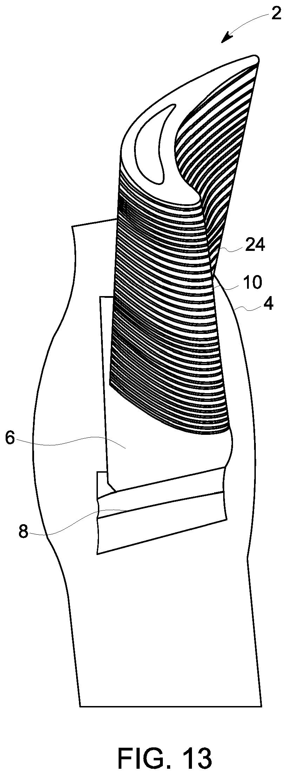

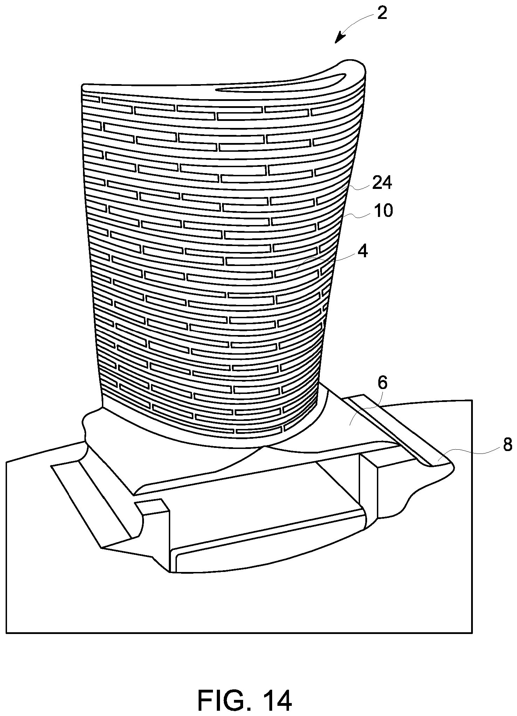

Referring to FIG. 9, an article or component 2 of a turbine includes a substrate 4 (e.g. an airfoil), a platform 6, and a mounting and securing structure 8 (e.g. a dovetail). A mask 60 is placed on the substrate. As used herein, the term "placed on" means that the mask 60 is in contact with the surface of the component, or with a coating provided on the component. The mask 60 may be made of a flexible, heat resisitive material, for example silicone rubber. The mask 60 may also be reinforced, for example with metal or fiberglass (e.g. wires or fibers). The flexible mask 60, unlike the rigid mask 36, may be formed and/or shaped to more easily conform to complex geometries, for example the substrate, i.e. airfoil surface, 4 shown in FIGS. 1 and 9-14. The mask 60 may also be adhered to the component 2 during application of the bondcoat 10, for example by a silicone rubber adhesive. After application of the bondcoat 10, the mask 60 may be removed from the component by, for example, heat or chemical reaction.

Referring again to FIGS. 9-11, the component 2 may have covers 62, 64, 66, formed of the same material as the mask 60 placed on the component to prevent application of the bondcoat 10 to areas where application of the bondcoat 10 is unnecessary. A cover 62 may be provided over the platform 6, a cover 64 may be provided over the mounting and securing structure 8 (e.g. dovetail), and a cover 66 may be provided over the end of the substrate 4 (i.e. over the blade tip cap). The covers 62, 64, 66 may be adhered to the component 2 during application of the bondcoat10 and removed after application in the same manner as the mask 60. The covers 62, 64, 66 may also be reinforced in the same manner as the mask 60.

It should be appreciated that the mask 60 and the covers 62, 64, 66 may be formed as a single piece or from a plurality of pieces configured to conform to the geometry of the surfaces they are intended to mask and/or cover. For example, the mask 60 may include two pieces, one configured to cover the pressure side of the airfoil and one configured to cover the suction side of the airfoil. Alternatively, the mask 60 may be formed as a single piece configured to cover both sides of the airfoil.

The mask 60 may be used in processes similar to those shown in FIGS. 4 and 5. For example, the mask 60 may be placed on the component 2 and an additive process (e.g. thermal spray) may be used to form the bondcoat 10 with engineered surfaces 24. An initial portion of the bondcoat 10 may be applied to the component 2 prior to placing the mask 60 on the substrate 4. For example, an initial layer of the bondcoat 10 about 4-5 mils (about 100-125 µm) thick may be applied to the substrate 4 prior to placing the mask 60 on the substrate 4.

The engineered surfaces 24 may then be formed by, for example, an APS device 38 such as shown in FIG. 4. The APS device 38 may make several passes over the mask 60 to form, or build, the engineered surfaces of the bondcoat 10. For example, the APS device 38 may apply about ¼ mil (about 6 µm) during each pass over the mask 60 to form about an additional 2-4 mils (about 50-100 µm) of the bondcoat 10 including the engineered surfaces 24. When the mask 60 is removed, any undesired deposit of the bondcoat material is removed with the mask 60.

A process similar to that shown in FIG. 5 may also be used. A bondcoat 10 may be applied to the substrate 4 and then the mask 60 may be placed on the bondcoat 10 and a substractive process may be used to form the engineered surfaces 24. Alternatively, the mask 60 may be placed on the bondcoat 10 formed on the substrate 4 and a photoresist may be applied over the mask 60. The mask 60 may then be removed and the resulting pattern of photoresist may define the engineered surfaces 24 and the grooves 25 may be formed by etching the bondcoat 10 to remove those portions of the bondcoat 10 not protected or covered by the photo resist.

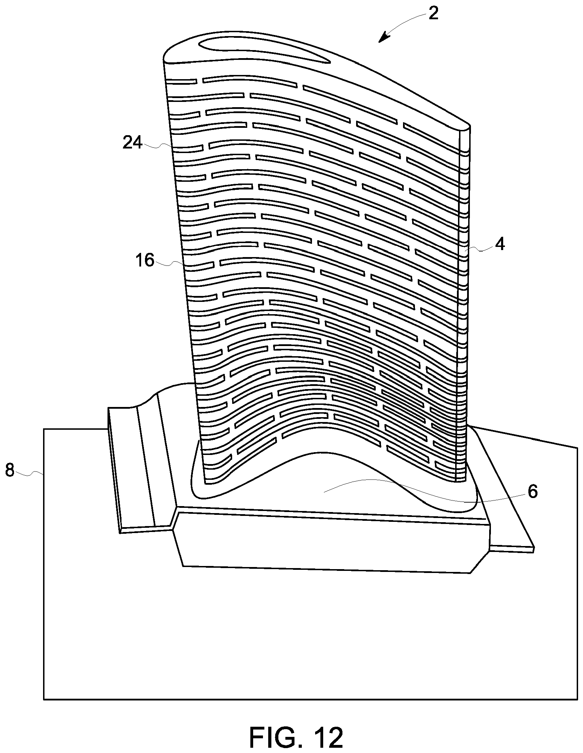

Referring to FIGS. 12-14, the resulting article or component 2 with the bondcoat 10 having engineered surfaces 24 is ready for the application of the additional layers 16, 18, 20 of the EBC system 22. The additional layers 16, 18, 20 are applied over the bondcoat 10 and mechanically locked in place by the pattern(s) provided by the engineered surfaces 24 of the bondcoat 10. The covers 64, 66, 68 may then also be removed from the platform 6, the mounting and securing structure 8, and the blade tip cap.

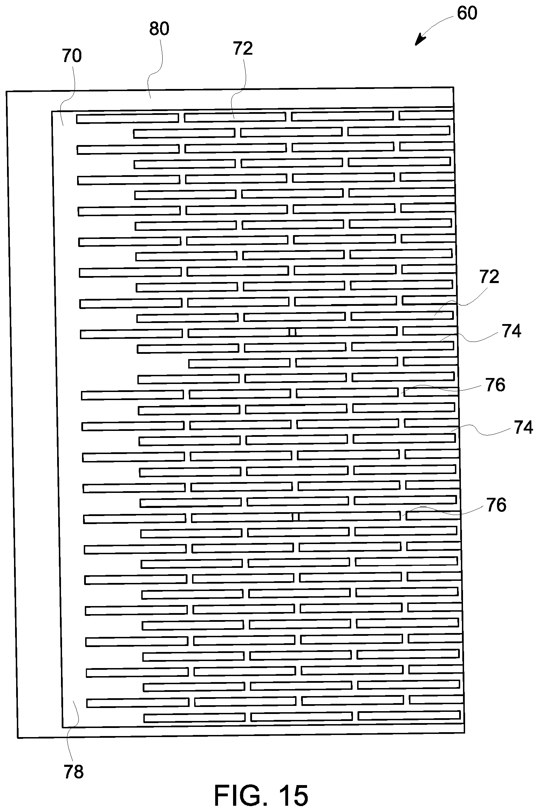

Referring to FIG. 15, in a method, which is not according to the invention, the mask 60 may be formed by laser cutting a flexible material, such as silicone rubber. Other methods, for example, stamping may be used. Apertures 72 corresponding to the pattern of the engineered surfaces 24 to be formed in the bondcoat 10 may be formed in the flexible material. Although the apertures 72 shown in FIG. 15 correspond to a generally uniform linear configuration, it should be appreciated that the apertures 72 may be provided in other patterns, defined by portions 74 and 76 of the mask, that are non-linear, for example triangular waves, or sinusoidal. The mask 60 may be provided with a backing 80, formed for example from Mylar, to keep the mask clean prior to application to the component 2.

The mask may also have an end region 70 that includes a portion 78 that does not include the apertures 72, i.e. does not include or define any portion of the mask pattern for forming the engineered surfaces. As shown in FIGS. 9-12, the end region 70 may extend beyond the substrate 4 to allow for the mask 60 to be applied (e.g. adhered) to the substrate 4 while providing a portion for gripping the mask during application and during removal of the mask 60 from the component 2.

The mask may be about 1/16 of an inch (about 1.6 mm) thick and the apertures 72 may be formed as shown in FIGS. 7 and 8, or the apertures may have straight or parallel side walls. As the mask 60 is placed on (e.g. adhered) to the substrate or an initial layer of bondcoat, unlike the "floating" mask shown in FIGS. 4 and 5, the mask 60 is more useful for near net shape airfoils and provides better dimensional control of the formation of the engineered surfaces due to the contact of the mask with the substrate or bondcoat. Post processing, for example machining, may also be reduced using the flexible mask 60.

While only certain features of the present technology have been illustrated and herein, many modifications and changes will occur to those skilled in the art. It is, therefore, to be understood that the appended claims are intended to cover all such modifications and changes.

## Claims

1. A method of forming an article (2), the method comprising:
forming a plurality of channels and ridges (24) in a silicon-containing layer (10) on a surface of a substrate (4) of the article (2) using a mask (60; 90) placed on the surface of the substrate (4) or the silicon-containing layer (10);
wherein the mask (60; 90) is placed on the surface of the substrate (4) or the silicon-containing layer (10) by an additive manufacturing process.

2. A method according to claim 1, wherein the silicon-containing layer (10) comprises elemental silicon, silicon carbide, silicon nitride, metal silicides, silicon alloys, or mixtures thereof.

3. A method according to claim 1 or claim 2, wherein the substrate (4) is a ceramic matrix composite material containing silicon carbide as a reinforcement phase and/or a matrix phase.

4. A method according to any one of claims 1-3, further comprising:
forming at least one outer layer (14, 16, 18, 20) overlying the surface of the silicon-containing layer (10), wherein the at least one outer layer (14, 16, 18, 20) comprises oxide phases, rare earth silicates, rare earth aluminosilicates, alkaline earth aluminosilicates or mixtures thereof.

5. A method according to any one of claims 1-4, wherein the plurality of channels and ridges (24) are formed by adding silicon-containing material to the silicon-containing layer (10) by spraying the silicon-containing material through the mask (60; 90) onto the silicon-containing layer (10).

6. A method according to any one of claims 1-4, wherein the plurality of channels and ridges (24) are formed by removing portions of the silicon-containing layer (10).

7. A method according to any one of claims 1-6, wherein the mask (60; 90) is formed of a flexible, heat resistive material such as silicone rubber.

8. A method according to any one of claims 1-7, further comprising:
adhering the mask (60, 90) to the surface of the substrate (4) or the silicon-containing layer (10).

9. A method according to any one of claims 1-8, further comprising:
cooling the mask (60; 90) during forming the plurality of channels and ridges by circulating a cooling fluid in a cooling channel (80) in the mask.

10. A method according to claim 1, wherein the additive manufacturing process comprises laser melting a thermoplastic or aluminum.

## Patentansprüche

1. Verfahren zum Bilden eines Gegenstands (2), wobei das Verfahren umfasst:
Ausbilden einer Vielzahl von Kanälen und Graten (24) in einer siliziumhaltigen Schicht (10) auf einer Oberfläche eines Substrats (4) des Gegenstands (2) unter Verwendung einer Maske (60; 90), die auf die Oberfläche des Substrats (4) oder der siliziumhaltigen Schicht (10) platziert ist;
wobei die Maske (60; 90) durch einen additiven Herstellungsprozess auf der Oberfläche des Substrats (4) oder der siliziumhaltigen Schicht (10) platziert wird.

2. Verfahren nach Anspruch 1, wobei die siliziumhaltige Schicht (10) elementares Silizium, Siliziumkarbid, Siliziumnitrid, Metallsilizide, Siliziumlegierungen oder Mischungen davon umfasst.

3. Verfahren nach Anspruch 1 oder Anspruch 2, wobei das Substrat (4) ein Keramikmatrix-Verbundmaterial ist, das Siliziumkarbid als Verstärkungsphase und/oder Matrixphase enthält.

4. Verfahren nach einem der Ansprüche 1 bis 3, ferner umfassend:
Ausbilden mindestens einer Außenschicht (14, 16, 18, 20), welche die Oberfläche der siliziumhaltigen Schicht (10) überlagert, wobei die mindestens eine Außenschicht (14, 16, 18, 20) Oxidphasen, Seltenerdsilikate, Seltenerdalumosilikate, Erdalkalialumosilikate oder Mischungen davon umfasst.

5. Verfahren nach einem der Ansprüche 1 bis 4, wobei die Vielzahl von Kanälen und Graten (24) durch Zugeben von siliziumhaltigem Material zu der siliziumhaltigen Schicht (10) durch Sprühen des siliziumhaltigen Materials durch die Maske (60; 90) hindurch auf die siliziumhaltige Schicht (10) gebildet werden.

6. Verfahren nach einem der Ansprüche 1 bis 4, wobei die Vielzahl von Kanälen und Graten (24) durch Entfernen von Abschnitten der siliziumhaltigen Schicht (10) gebildet werden.

7. Verfahren nach einem der Ansprüche 1 bis 6, wobei die Maske (60; 90) aus einem flexiblen, wärmebeständigen Material wie Silikonkautschuk gebildet wird.

8. Verfahren nach einem der Ansprüche 1 bis 7, ferner umfassend:
Anhaften der Maske (60, 90) an die Oberfläche des Substrats (4) oder der siliziumhaltigen Schicht (10).

9. Verfahren nach einem der Ansprüche 1 bis 8, ferner umfassend:
Kühlen der Maske (60; 90) während der Bildung der Vielzahl von Kanälen und Graten durch Umwälzen eines Kühlfluids in einem Kühlkanal (80) in der Maske.

10. Verfahren nach Anspruch 1, wobei das additive Herstellungsverfahren ein Laserschmelzen eines Thermoplasten oder von Aluminium umfasst.

## Revendications

1. Procédé de formation d'un article (2), le procédé comprenant :
la formation d'une pluralité de canaux et de crêtes (24) dans une couche contenant du silicium (10) sur une surface d'un substrat (4) de l'article (2) en utilisant un masque (60 ; 90) placé sur la surface du substrat (4) ou de la couche contenant du silicium (10) ;
dans lequel le masque (60 ; 90) est placé sur la surface du substrat (4) ou de la couche contenant du silicium (10) par un processus de fabrication additive.

2. Procédé selon la revendication 1, dans lequel la couche contenant du silicium (10) comprend du silicium élémentaire, du carbure de silicium, du nitrure de silicium, des siliciures métalliques, des alliages de silicium, ou des mélanges de ceux-ci.

3. Procédé selon la revendication 1 ou la revendication 2, dans lequel le substrat (4) est un matériau composite à matrice céramique contenant du carbure de silicium en tant que phase de renforcement et/ou phase matricielle.

4. Procédé selon l'une quelconque des revendications 1 à 3, comprenant en outre :
la formation d'au moins une couche externe (14, 16, 18, 20) recouvrant la surface de la couche contenant du silicium (10), dans lequel l'au moins une couche externe (14, 16, 18, 20) comprend des phases d'oxyde, des silicates de terres rares, des aluminosilicates de terres rares, des aluminosilicates alcalino-terreux ou des mélanges de ceux-ci.

5. Procédé selon l'une quelconque des revendications 1 à 4, dans lequel la pluralité de canaux et de crêtes (24) sont formés en ajoutant un matériau contenant du silicium à la couche contenant du silicium (10) par pulvérisation du matériau contenant du silicium à travers le masque (60 ; 90) sur la couche contenant du silicium (10).

6. Procédé selon l'une quelconque des revendications 1 à 4, dans lequel la pluralité de canaux et de crêtes (24) sont formés par retrait de parties de la couche contenant du silicium (10).

7. Procédé selon l'une quelconque des revendications 1 à 6, dans lequel le masque (60 ; 90) est formé d'un matériau souple résistant à la chaleur tel que du caoutchouc de silicone.

8. Procédé selon l'une quelconque des revendications 1 à 7, comprenant en outre :
l'adhérence du masque (60, 90) à la surface du substrat (4) ou de la couche contenant du silicium (10).

9. Procédé selon l'une quelconque des revendications 1 à 8, comprenant en outre :
le refroidissement du masque (60 ; 90) pendant la formation de la pluralité de canaux et de crêtes en faisant circuler un fluide de refroidissement dans un canal de refroidissement (80) dans le masque.

10. Procédé selon la revendication 1, dans lequel le processus de fabrication additive comprend la fusion laser d'un thermoplastique ou d'aluminium.
